(19) Europäisches Patentamt
European Patent Office
Office européen des brevets

(11) EP 0 857 742 B1

(12) EUROPÄISCHE PATENTSCHRIFT

(45) Veröffentlichungstag und Bekanntmachung des Hinweises auf die Patenterteilung:
**10.12.2003 Patentblatt 2003/50**

(51) Int Cl.7: **C08G 59/38**, C09D 163/00, C09D 5/03, C08G 59/32

(21) Anmeldenummer: **98810043.4**

(22) Anmeldetag: **27.01.1998**

(54) **Pulverlack**

Powder coating

Revêtement sous forme de poudre

(84) Benannte Vertragsstaaten:
**CH DE ES FR GB IT LI NL**

(30) Priorität: **07.02.1997 CH 27497**

(43) Veröffentlichungstag der Anmeldung:
**12.08.1998 Patentblatt 1998/33**

(73) Patentinhaber: **Vantico AG**
**4057 Basel (CH)**

(72) Erfinder:
- **Finter, Jürgen**
  **79102 Freiburg (DE)**
- **Frischinger, Isabelle**
  **68640 Riespach (FR)**
- **Poget, Christine**
  **1807 Blonay (CH)**

(74) Vertreter: **Dannappel, Hans-Jochen, Dr. et al**
**Solvias AG,**
**Patente,**
**WKL-402.4.26,**
**Klybeckstrasse 191**
**4002 Basel (CH)**

(56) Entgegenhaltungen:
**EP-A- 0 265 655**
**EP-A- 0 299 421**
**US-A- 4 722 981**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 857 742 B1

## Beschreibung

Die vorliegende Erfindung betrifft eine Pulverlackzusammensetzungauf Basis eines Epoxidharzgemisches und ein bevorzugtes Verfahren zur Herstellung eines für diese Lackzusammensetzungen geeigneten Epoxidharzgemisches.

Es sind bereits viele Pulverlackzusammensetzungen für die unterschiedlichsten Zwecke bekannt, die auf Epoxidharzen und Polyestern mit freien Carboxylgruppen als den wesentlichen Härtungskomponenten basieren.

So sind beispielsweise in der EP-A-0 299 421 Pulverlacke auf Basis von festen Epoxidharzen sowie Polyestern mit freien Carboxylgruppen für Dekorationszwecke beschrieben, bei denen als Epoxidharz ein Reaktionsprodukt zwischen einem festen Epoxidharz mit durchschnittlich mehr als einer endständigen Epoxidgruppe pro Molekül, beispielsweise einem Kondensationsprodukt von Bisphenol A-diglycidylether mit Bisphenol A, und dem Monoimid einer Dicarbonsäure verwendet wird. Die Epoxidharze weisen einen relativ hohen Mettler-Erweichungspunkt von mindestens 85°C auf, was sich vorteilhaft auf die Lagerstabilität der mit ihnen hergestellten Pulverlacke auswirkt. Gleichzeitig haben die genannten Epoxidharze eine niedrige Schmelzviskosität und zeigen ein gutes Verlaufsverhalten, so dass sich besonders gleichmässige Pulverlackflächen bilden und kein sogenannter Orangenschaleneffekt auftritt.

Aus der EP-A 0 119 164 sind weiterhin schon Pulverlackzusammensetzungen bekannt, enthaltend:

(A) ein festes Epoxidharzgemisch, das mindestens eine Epoxidharzkomponente (A1) und eine Epoxidharzkomponente (A2) umfasst, sowie
(B) einen Polyester mit freien Carboxylgruppen, in einer zur Aushärtung der Zusammensetzung ausreichenden Menge, wobei

die Epoxidharzkomponente (A1) aus Epoxidharz mit einer mittleren Epoxidfunktionalität besteht, die grösser als 2 ist, und
die Epoxidharzkomponente (A2) aus Epoxidharz mit einer mittleren Epoxidfunktionalität besteht, die höchstens gleich 2 ist.

Als Komponente (A2) des Epoxidharzgemisches (A) wird hierbei z. B. ein Diglycidylether auf Basis von Bisphenol A eingesetzt (mittlere Epoxidfunktionalität gleich 2). Die genannten Pulverlackbeschichtungen werden für die Innenbeschichtung von Metallbehältern eingesetzt. Für Dekorationszwecke sind diese Pulverlackzusammensetzungen jedoch weniger geeignet, da ihr Verlaufsverhalten unbefriedigend ist.

Gegenstand der vorliegenden Erfindung ist eine besonders in dieser Hinsicht verbesserte Pulverlackzusammensetzung, enthaltend

(A) ein festes Epoxidharzgemisch, das mindestens eine Epoxidharzkomponente (A1 ) und eine Epoxidharzkomponente (A2) umfasst, sowie
(B) einen Polyester mit freien Carboxylgruppen, in einer zur Aushärtung der Zusammensetzung ausreichenden Menge, wobei

die Epoxidharzkomponente (A1) aus einem oder mehreren Epoxidharzen besteht und insgesamt eine mittlere Epoxidfunktionalität aufweist, die grösser als 2 ist, und die Zusammensetzung dadurch gekennzeichnet ist, dass die Epoxidharzkomponente (A2) aus einem oder mehreren avancierten Epoxidharzen besteht, die jeweils eine mittlere Epoxidfunktionalität aufweisen, die mindestens 1,2 aber kleiner als 1,95 ist, und die das Produkt einer Umsetzung darstellen, bei der (i) mindestens eine Diglycidylverbindung gleichzeitig mit (ii) mindestens einer Bisphenolverbindung und (iii) mindestens einem Monophenol als Edukte umgesetzt werden, und wobei die Zusammensetzung weiterhin dadurch gekennzeichnet ist, dass die Differenz aus der mittleren Epoxidfunktionalität des Epoxidharzgemisches (A) und der mittleren Epoxidfunktionalität der Komponente (A2) des Gemisches mindestens 0,05 aber kleiner als 0,8 ist.

Die avancierten Epoxidharze, aus denen die Epoxidharzkomponente (A2) besteht, stellen bei Raumtemperatur (15 bis 25°C) feste Produkte von im Idealfall kettenförmiger Molekularstruktur dar, die durch Umsetzung einer oder mehrerer Diglycidylverbindungen mit einer oder mehreren Bisphenolverbindungen in Gegenwart eines oder mehrerer Monophenole sowie eines geeigneten Avancierungskatalysators erhältlich sind. Wie bei Avancierungsreaktionen von Epoxidharzen allgemein erforderlich, müssen die Glycidylgruppen der Diglycidylkomponente bei dieser Umsetzung gegenüber den phenolischen Hydroxylgruppen im stöchiometrischen Überschuss vorliegen. Das Monophenol im Umsetzungsgemisch führt zu Kettenabbrüchen während der Avancierungsreaktion, so dass man, ausgehend von Diglycidylverbindungen, wie z. B. Diglycidylethern von Bisphenolen (mittlere Epoxidfunktionalität gleich 2), avancierte Epoxidharze mit einer mittleren Epoxidfunktionalität erhält, die kleiner als 2 ist. Selbstverständlich stellen die in dieser Weise avancierten Epoxidharze in Wirklichkeit Stoffgemische dar, die aus mehreren verschiedenartigen Epoxidverbindungen bestehen, nämlich insbesondere aus Di- und Monoglycidylverbindungen. Die oben angegebenen Zahlenwerte für die mittlere Epoxidfunktionalität stellen daher einen theoretischen Mittelwert für die Zahl der Epoxidgruppen

dar, die ein Molekül des avancierten Epoxidharzes aufweist, sagen jedoch insbesondere nichts über die genaue Anzahl und Art der verschiedenen Epoxidverbindungen in einem derartigen Stoffgemisch aus. Die mittlere Epoxidfunktionalität ($f_{(AvaH)}$) eines unter Verwendung von Monophenol avancierten Epoxidharzes kann für die Zwecke dieser Anmeldung mit Hilfe der Gleichung (1) berechnet werden:

$$f_{(AvaH)} = 2 - (2\ n_{(MoPh)} / d) \qquad (1),$$

wobei $n_{(MoPh)}$ der Anzahl von Molen an Monophenol entspricht, die für die Herstellung des avancierten Epoxidharzes eingesetzt wird, und d die Differenz ist zwischen der Anzahl von Epoxidequivalenten, welcher die zur Avancierung eingesetzte Menge Diglycidylverbindung (i) entspricht, und der Anzahl von Hydroxylequivalenten, welcher die hierbei eingesetzte Menge Bisphenolverbindung (ii) entspricht. Bevorzugt beträgt die Untergrenze für die mittlere Epoxidfunktionalität der avancierten Epoxidharze in der Epoxidkomponente (A2) 1,4 und die Obergrenze bei 1,9. Besonders gut geeignet sind avancierte Epoxidharze mit einer mittleren Epoxidfunktionalität von 1,5 bis 1,8, insbesondere von 1,55 bis 1,65. Da es sich bei diesen Werten für die mittleren Epoxidfunktionalitäten um theoretische Mittelwerte handelt, werden in der Praxis experimentell bestimmte Werte für die Epoxidfunktionalitäten natürlich in gewissem Rahmen hiervon abweichen. In der Praxis gefundenen Werte liegen z. T. bis zu etwa 15% niedriger. Dies hat aber keinen für die Praxis bedeutsamen Effekt auf die Wirkungen der vorliegenden Erfindung.

Besonders bevorzugt sind erfindungsgemässe Pulverlackzusammensetzungen, bei denen die avancierten Epoxidharze in der Epoxidharzkomponente (A2) das Reaktionsprodukt der Umsetzung einer oder mehrerer Diglycidylverbindungen der Formel (I) darstellen:

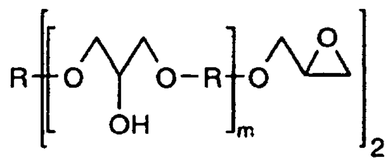

(I),

worin R der Formel

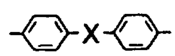

und X in jeder der Gruppen R unabhängig voneinander $>CH_2$ oder $>C(CH_3)_2$ entsprechen und der Index m die Zahl von 0 bis etwa 1 bedeutet, die der Hälfte der durchschnittlichen Anzahl wiederkehrender Strukturelemente

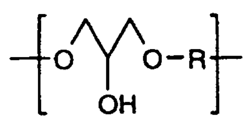

in den Molekülen des Diglycidylethers entspricht.

Ganz besonders bevorzugte Diglycidylverbindungen der Formel (I) sind reine Bisphenol A-diglycidylether und Bisphenol F-diglycidylether, insbesondere solche, bei denen m 0 oder annähernd 0 ist, beispielsweise im Bereich von 0 bis einschliesslich 0,1 liegt.

Als Bisphenolverbindungen (ii) werden bevorzugt Bisphenol A und Bisphenol F verwandt.

Die Diglycidylether der Formel (I) und die Bisphenolverbindungen werden bei der Avancierung vorzugsweise in einem stöchiometrischen Verhältnis zwischen 2 zu 1 und 1,3 zu 1 eingesetzt, wenn m gleich 0 oder annährend gleich 0 ist. Beträgt m 1 oder annährend 1, liegt die Untergrenze für das genannte stöchiometrische Verhältnis bevorzugt bei etwa 2 zu 1. Werden Gemische von Diglycidylethern verschiedener der genannten Werte für m verwandt, liegen die Untergrenzen für das stöchiometrische Verhältnis von Diglycidylether und Bisphenolverbindungen zweckmässig zwischen denen, die oben für die jeweiligen m-Werte angegeben sind. Beispielsweise könnte ein Epoxidharzgemisch, das aus etwa 33 Mol-% eines Diglycidylethers der Formel (I) mit m = 1 und etwa 66 Mol-% eines weiteren Diglycidylethers der Formel (I) mit m = 0 besteht, gut mit Bisphenolverbindungen in einem stöchiometrischen Verhältnis von 2

zu 1 bis 1,5 zu 1 eingesetzt werden.

Als Monophenole (iii) werden für die Avancierung besonders Phenole bevorzugt, die einen oder mehrere, z. B. zwei $C_1$-$C_{12}$-Alkylsubstituenten, oder einen $C_6$-$C_{10}$-Arylsubstituenten aufweisen, z. B. Ethyl- n-Propyl-, Isopropyl-, n-Butyl-, Isobutyl-, sec-Butyl-, tert-Butyl, n-Pentyl-, Isopentyl-, tert-Pentyl, Neopentyl-, n-Hexyl-, Isohexyl- entsprechende Heptyl- und Octyl-Substituenten, insbesondere tert-Octyl Nonyl, Dodecyl oder Phenyl. Besonders bevorzugt sind Mono-$C_1$-$C_8$-Alkylphenole, speziell Mono-$C_3$-$C_8$-Alkylphenole, insbesondere die entsprechenden para-Alkylphenole, und p-Phenylphenol. Ganz besonders bevorzugt sind Mono-$C_4$-$C_8$-Alkylphenole, insbesondere wiederum die entsprechenden para-Phenole. Die für die Herstellung der avancierten Epoxidharze der Epoxidharzkomponente (A2) erforderliche molare Menge Monophenol richtet sich nach der angestebten mittleren Epoxidfunktionalität des Harzes sowie nach der Menge der eingesetzten Diglycidyl- und Bisphenolverbindungen. Sie kann z. B. aus der obigen Gleichung (1) bestimmt werden und liegt zwischen etwa 0,40 und 0,025 Mol pro überschüssigem Equivalent Epoxidgruppen in dem Gemisch aus Diglycidyl- und Bisphenolverbindung.

Die Umsetzung der Komponenten (i), (ii) und (iii) des Avancierungsgemisches erfolgt bevorzugt bei Temperaturen zwischen ca. 130 bis 200°C, insbesondere von 150 bis 185°C, in Gegenwart eines üblichen Avancierungskatalysators, wie z. B. 2-Phenylimidazol, das einen thermisch nicht desaktivierbaren Avancierungskatalysator darstellt, N,N-Ethyl-methylpiperidiniumiodid oder Tributylamin, das einen durch Erhitzen auf Temperaturen von mehr als 175°C thermisch desaktivierbaren Avancierungskatalysator darstellt, so dass die Obergrenze für die Umsetzungstemperatur in diesem Fall zumindest 175°C nicht überschreiten sollte.

Die Harzkomponente (A1) weist insgesamt eine mittlere Epoxidfunktionalität auf, die grösser als 2 ist und kann praktisch jedes bei Raumtemperatur flüssige und vorzugsweise feste Epoxidharz mit einer mittleren Epoxidfunktionalität von 2 oder grösser als 2 umfassen, d. h. mit durchschnittlich 2 oder mehr als 2 Epoxidgruppen pro Molekül, wie z. B entsprechende Polyglycidylether oder Polyglycidylester. Besonders bevorzugte Beispiele von für die Komponente (A1) geeigneten Harzen sind:

- (A1,1 ) Triglycidylisocyanurat;
- (A1,2) Trimellitsäuretriglycidylester;
- (A1,3) Hexahydrotrimellitsäuretriglycidylester;
- (A1,4) feste Mischphasen aus
  - einer ersten Komponente ausgewählt aus
    - (A1,4,1) Trimellitsäuretriglycidylester;
    - (A1,4,2) Hexahydrotrimellitsäuretriglycidylester und
    - (A1,4,3) Gemischen der Bestandteile (A1,4,1) und (A1,4,2) und
  - einer zweiten Komponente ausgewählt aus
    - (A1,4,4) Terephthalsäurediglycidylester;
    - (A1,4,5) Hexahydroterephthalsäurediglycidylester und
    - (A1,4,6) Gemischen der Bestandteile (A1,4,4) und (A1,4,5);
- (A1,5) Epoxyphenolnovolake;
- (A1,6) Epoxycresolnovolake und
- (A1,7) Gemische von zwei oder mehr der Harze (A1,1 ), (A1,2), (A1,3), (A1,4) , (A1,5) und (A1,6).

Feste Mischphasen, wie sie unter (A1,4) genannt sind, basieren auf mindestens einer bei Raumtemperatur festen sowie mindestens einer bei Raumtemperatur flüssigen Epoxidharzkomponente. Mischphasen dieses Typs und deren Herstellung sind z. B. in der EP-A-0 536 085 beschrieben.

Ganz besonders bevorzugt sind (A1,5) Epoxyphenolnovolake sowie (A1,6) Epoxycresolnovolake, insbesondere die letzteren, da sie unter anderem zu keiner wesentlichen Erniedrigung des Tg-Wertes (Glasübergangstemperatur) der Epoxidkomponente (A2) und somit zu Epoxidharzgemischen (A) von besonders hoher Erweichungstemperatur führen, was die Lagerfähigkeit der fertigen Pulverlacke positiv beeinflusst.

Das Epoxidharzgemisch (A) kann gegebenenfalls auch geringe Mengen, z. B. weniger als etwa 15 Gewichtsprozent, bezogen auf das Gesamtgemisch (A), andere, bevorzugt feste Epoxidharze als die Epoxidkomponenten (A1) und (A2) enthalten, z. B. einen herkömmlichen Bisphenol A-diglycidylether. Der Zusatz solcher anderen Epoxidharze ist manchmal nicht zu vermeiden, da derartige Harze teilweise in handelsüblichen Zusatzstoffen für Pulverlacke enthalten sind, z. B. in üblichen Modifizierungsmitteln für die Oberflächenspannung von Puvlerlacken, welche durch Ausgleich von lokalen Differenzen in der Oberflächenspannung z. B. eine Kraterbildung beim Aushärten der Pulverlackbeschichtung verhindern können.

Bei einer speziellen Ausführungsform der vorliegenden Erfindung stellt das Epoxidharzgemisch (A) ein Produkt dar, das nach einem Verfahren erhältlich ist, bei dem man:

a) die Edukte (i), (ii) und (iii) des Advancementharzes in Gegenwart eines thermisch nicht desaktivierbaren Advancementkatalysators, insbesondere in Gegenwart von 2-Methylimidazol, bei Temperaturen von mindestens 130°C, bevorzugt von 160 bis 190°C, umsetzt,
b) nach Beendigung der Umsetzung bei einer Temperatur von etwa 130°C zu dem hierbei erhaltenen Produkt die Epoxidharzkomponente (A1) zugibt und
c) das erhaltene Epoxidharzgemisch bei dieser Temperatur homogenisiert.

Die Homogenisierung sollte bevorzugt nicht länger als eine Stunde, insbesondere nicht länger als 30 Minuten dauern. Gut geeignet ist z. B. eine 15-minütige Homogensiserung.

Der Verfahrensschritt (b) kann gleich im Anschluss an die Avancierungsreaktion erfolgen, indem man das in (a) erhaltene Advancementharz auf etwa 130°C abkühlt und das Verfahren gleich mit dem Schritt (b) fortsetzt. Die Epoxidharzkompoente (A2) kann jedoch auch gesondert hergestellt werden und erst zu einem späteren Zeitpunkt mit der Komponente (A1 ) durch gemeinsames Schmelzen, bevorzugt bei einer Temperatur von etwa 130°C, vermischt und homogenisiert werden.

Bei einer weiteren bevorzugten Ausführungsform der vorliegenden Erfindung stellt das Epoxidharzgemisch (A) ein Produkt dar, das nach einem Verfahren erhältlich ist, bei dem man:

a) die Edukte (i), (ii) und (iii) des Advancementharzes in Gegenwart eines thermisch desaktivierbaren Advancementkatalysators, insbesondere in Gegenwart von Tributylamin, bei Temperaturen von 160 bis 170°C, bevorzugt von etwa 165°C, umsetzt,
b) nach Beendigung der Umsetzung den Katalysator durch Erhitzen auf eine Temperatur von etwa 180°C desaktiviert und bei dieser Temperatur zu dem hierbei erhaltenen Produkt die Epoxidharzkomponente (A1 ) zugibt und
c) das erhaltene Epoxidharzgemisch bei dieser Temperatur homogenisiert.

Auch hierbei sollte die Homogenisierung bevorzugt nicht länger als eine Stunde, insbesondere nicht länger als 30 Minuten, z. B. 15 Minuten dauern.

Ein Verfahren zur Herstellung eines Epoxidharzgemisches, bei dem man:

a) die Edukte (i), (ii) und (iii) des Advancementharzes in Gegenwart eines thermisch desaktivierbaren Advancementkatalysators, insbesondere in Gegenwart von Tributylamin, bei Temperaturen von 160 bis 170°C, bevorzugt von etwa 165°C, umsetzt,
b) nach Beendigung der Umsetzung den Katalysator durch Erhitzen auf eine Temperatur von etwa 180°C desaktiviert und bei dieser Temperatur zu dem hierbei erhaltenen Produkt die Epoxidharzkomponente (A1 ) zugibt und
c) das erhaltene Epoxidharzgemisch bei dieser Temperatur homogenisiert,

bildet einen weiteren Gegenstand der vorliegenden Erfindung.

Besonders im Verlauf von Stufe b) der oben genannten Verfahren können gegebenenfalls auch noch Zusatzstoffe, wie z. B. das oben schon erwähnte Modifizierungsmittel für die Oberflächenspannung, zugegeben werden.

Bevorzugt weist das Epoxidharzgemisch (A) insgesamt eine mittlere Epoxidfunktionalität auf, die kleiner als 2 ist. Unter der mittleren Epoxidfunktionalität $f_{(Mix)}$ eines Epoxidharzgemisches, bestehend aus insgesamt i Epoxidharzen, wird in dieser Anmeldung generell der Quotient verstanden, gebildet aus der Summe aller i Produkte aus der mittleren Epoxidfunktionalität $f_i$ eines der i Epoxidharze und dessen jeweiligem molaren Anteil $n_i$ an dem Gemisch sowie der Summe der molaren Anteile aller i Epoxidharze, d. h. der Zahlenwert, der sich aus Gleichung (2) ergibt:

$$f_{(Mix)} = \frac{\Sigma(f_i n_i)}{\Sigma(n_i)} \quad (2).$$

Besonders bevorzugt beträgt die mittlere Epoxidfunktionalität des Epoxidharzgemisches (A) 1,6 bis 1,9, insbesondere 1,65 bis 1,80. Besonders die erfindungsgemässen Pulverlackzusammensetzungen, die ein Epoxidharzgemisch (A) mit einer mittleren Epoxidfunktionalität von etwa 1,75 enthalten, zeigen ein in ausgezeichneter Weise ausgewogenes Verhältnis von Verlaufseigenschaften und mechanischen Eigenschaften.

Alle gebräuchlichen Polyester mit freien Carboxylgruppen kommen als Bestandteil der Komponente (B) der erfindungsgemässen Pulverlacke in Frage. Vorzugsweise haben die Polyester eine Säurezahl (angegeben in mg KOH/g Polyester) von 10 bis 100 und ein Molekulargewicht von 4000 bis 15000, insbesondere von 6500 bis 11000 (Gewichtsmittel Mw aus GPC-Messung mit Polystyroleichung). Das Verhältnis Mw zu Mn liegt bei diesen Polyestern im allgemeinen zwischen 2 und 10. Die Polyester sind zweckmässig bei Raumtemperatur fest und haben eine Glasumwandlungstemperatur von 35 bis 120 °C, vorzugsweise von 40 bis 80 °C.

Polyester wie diese sind z. B. aus der US-A-3,397,254 oder der EP-A-0 600 546 bekannt, auf deren Offenbarung ausdrücklich verwiesen wird. Sie sind Reaktionsprodukte von Polyolen mit Dicarbonsäuren und gegebenenfalls polyfunktionellen Carbonsäuren oder den entsprechenden Carbonsäureanhydriden.

Geeignete Polyole sind beispielsweise Ethylenglycol, die Propylenglycole, 1,3-Butandiol, 1,4-Butandiol, Neopentandiol, Isopentylglycol, 1,6 Hexandiol, Glycerin, Hexantriol, Trimethylolethan, Trimethylolpropan, Erythrit, Pentaerythrit, Cyclohexandiol oder Dimethylolcyclohexan.

Als Dicarbonsäuren geeignet sind z. B. Isophthalsäure, Terephthalsäure, Phthalsäure, Methylphthalsäuren, Tetrahydrophthalsäure, Methyltetrahydrophthalsäuren, z. B. 4-Methyltetrahydrophthalsäure, Cyclohexandicarbonsäuren, Bernsteinsäure, Glutarsäure, Adipinsäure, Pimelinsäure, Suberinsäure, Azelainsäure, Sebacinsäure, Fumarsäure, Maleinsäure oder 4,4'-Diphenyldicarbonsäure usw. Geeignete Tricarbonsäuren sind z. B. aliphatische Tricarbonsäuren, wie 1,2,3-Propantricarbonsäure, aromatische Tricarbonsäuren, wie Trimesinsäure, Trimellitsäure und Hemimellitsäure oder von cycloaliphatischen Tricarbonsäuren, wie 6-Methyl-cyclohex-4-en-1,2,3-tricarbonsäure. Geeignete Tetracarbonsäuren sind z. B. Pyromellitsäure oder Benzophenon-3,3',4,4'-tetracarbonsäure.

Besonders häufig basieren kommerziell verfügbare Polyester auf Neopentylglycol und/oder Trimethylolpropan als wesentlichen alkoholischen Bestandteilen sowie auf Adipinsäure und/oder Terephthalsäure und/oder Isophthalsäure und/oder Trimellitsäure als wesentlichen Säurekomponenten. Erfindungsgemässe Pulverlackzusammensetzungen, die trimellitsäurefreie Polyester enthalten, zeigen oftmals einen besonders guten Verlauf.

Die Komponenten A und B sind in den erfindungsgemässen Pulverlacken bevorzugt in solchen Mengen enthalten, dass das Verhältnis von freien Carboxylgruppen zu Epoxidgruppen im Pulverlack zwischen 0,5 zu 1 und 2 zu 1 liegt, bevorzugt zwischen 0,8 zu 1 und 1,2 zu 1, insbesondere bei etwa 1 zu 1 liegt. Vorzugsweise sind hierbei freie Carboxylgruppen enthaltende Polyester und Epoxidharze insgesamt in einem der Gewichtsverhältnisse 70 ± 5 zu 30 ± 5, 60 ± 5 zu 40 ± 5 oder 50 ± 5 zu 50 ± 5 enthalten (70/30-; 60/40-und 50/50-Hybridsysteme).

Die erfindungsgemässen Pulverlacke können ferner weitere in der Lackindustrie übliche Zusatzstoffe enthalten, wie beispielsweise Lichtschutzmittel, Farbstoffe, Pigmente, z. B. Titandioxid, Entgasungsmittel, z. B. Benzoin, und/oder Verlaufsmittel.

Die erfindungsgemässen Pulverlacke können durch einfaches Mischen der Komponenten (A) und (B) sowie der weiteren Bestandteile, z. B. in einer Kugelmühle, hergestellt werden. Eine andere Möglichkeit besteht darin, dass man die Bestandteile zusammen aufschmilzt, vermischt und homogenisiert, z. B. mit einer Extrusionsmaschine, wie einem Buss-Kokneter, die Masse abkühlt und zerkleinert. Die fertigen Pulverlackmischungen weisen vorzugsweise eine Partikelgrösse im Bereich von 0,015 bis 500 µm, insbesondere von 10 bis 100 µm, auf.

Die Pulverlacke werden nach Applikation auf den zu beschichtenden Gegenstand bei einer Temperatur von mindestens etwa 100 °C, vorzugsweise 150 bis 250 °C, gehärtet. Für die Härtung sind etwa 5 bis 60 Minuten erforderlich. Zur Beschichtung geeignet sind alle Materialien, die bei den zur Härtung erforderlichen Temperaturen stabil sind, insbesondere Keramik, Glas und Metalle.

Beispiel 1:

In einem 1,5 1 Fünfhalskolben, ausgerüstet mit einem mechanischen Stahlrührer, Vakuumanschluss, Rückflusskühler, Kontakthermometer und einer regelbaren Heizvorrichtung werden 709,15 g (3,766 Epoxidequivalente) Bisphenol A-diglycidylether gegeben und unter Rühren auf 100°C erwärmt. Dann werden 240,85 g (2,112 Hydroxylequivalente) Bisphenol A und 50 g (0,333 Hydroxyleqivalente) p-tert-Butylphenol zugegeben und die Temperatur auf 100°C gehalten, bis sich das Bisphenol A gelöst hat. Danach werden bei 100°C ca. 2,85 g einer 1%-igen Lösung von 2-Phenylimidazol in n-Butanol als Avancierungskatalysator zugegeben, die Temperatur wird innerhalb einer Stunde auf 180°C erhöht und das Gemisch 1 h 42min bei dieser Temperatur gehalten. Eine Probe des Harzes wird zur Bestimmung der Epoxidequivalentgewichtes (EEWp), des Mettler-Erweichungspunktes und der Höppler-Viskosität entnommen. Das Harz (Harz E1) hat ein Epoxidequivalentgewicht ($EEW_p$) von 800 ($EEW_{theoretisch}$ 757), einen Mettler-Erweichungspunkt von 92,6°C (gemessen in einem Mettler-Thermosystem FP 800) und eine Höppler-Viskosität von 350 mPa·s (25°C/40% in Butylcarbinol nach DIN 53015). Die mittlere Epoxidfunktionalität $f_{(AvaH)}$ des Harzes beträgt 1,6, das theoretische mittlere Molekulargewicht 1211. Danach wird das Harz bis zu einer Temperatur von etwa 130°C abgekühlt und es werden zu je einem Teil des Harzes 4,7 Gew.-% (Harz E1A) und 10,2 Gew.-% (Harz E1B) Epoxycresolnovolak (Araldit® ECN 1299, Molekulargewicht ca. 1270; Epoxidequivalentgewicht 231, mittlere Epoxidfunktionalität 5,4) zugefügt.

Zum Vergleich mit Pulverlacken gemäss der EP-A-0 119 164 wird ein herkömmliches avanciertes Bisphenol A-diglycidyletherharz hergestellt, dessen $EEW_p$ ebenfalls 800 beträgt. Dies geschieht in der gleichen Weise, wie oben

beschrieben, wobei 718,75 g (3,817 Epoxideqivalente) des oben verwendeten Bisphenol A-diglycidylethers und 281,25 g (2,466 Hydroxylequivalente) Bisphenol A in Gegenwart von ca. 2,85 g des oben schon genannten 2-Phenylimidazol-Katalysators jedoch ohne die Zugabe von p-tert-Butylphenol umgesetzt werden. Das Harz (Harz V1) hat ein Epoxidequivalentgewicht ($EEW_p$) von 800 ($EEW_{theoretisch}$ 740), einen Mettler-Erweichungspunkt von 103,4°C (gemessen in einem Mettler-Thermosystem FP 800) und eine Höppler-Viskosität von 650 mPa·s (25°C/40% in Butylcarbinol nach DIN 53015). Die mittlere Epoxidfunktionalität $f_{(AvaH)}$ des Harzes beträgt 2, das theoretische mittlere Molekulargewicht 1480. Danach wird das Harz bis zu einer Temperatur von etwa 130°C abgekühlt und zu je einem Teil des Harzes 0 Gew.-% (Harz V1N); 4,7 Gew.-% (Harz V1A) und 10,2 Gew.-% (Harz V1 B) Epoxycresolnovolak (Araldit® ECN 1299, Molekulargewicht ca. 1270; Epoxidequivalentgewicht 235, mittlere Epoxidfunktionalität 5,4) zugefügt. Die Epoxidharzgemische E1A, E1B sowie V1A und V1B weisen folgende Eigenschaften auf:

| Harz | Gew.-% ECN 1299 | $f_{(Mix)}$ | Mettler-Softening Point [°C] |
|---|---|---|---|
| E1A | 4,7 | 1,78 | 92,8 |
| E1B | 10,2 | 1,97 | 93,1 |
| V1A | 4,7 | 2,20 | 103,8 |
| V1B | 10,2 | 2,39 | 103,1 |

Unter Verwendung jeweils eines der vier Harzgemische sowie des Harzes V1 N werden die fünf Pulverlackzusammensetzungen PL-E1A, PL-E1B, PL-V1N, PL-V1A sowie PL-V1B hergestellt, mit der in der nachfolgenden Tabelle angegebenen Zusammensetzung (Mengenangabe in Gramm):

| Bestandteil | PL-E1A | PL-E1B | PL-V1N | PL-V1A | PL-V1B |
|---|---|---|---|---|---|
| Harz E1A | 46,22 | --- | --- | --- | --- |
| Harz E1B | --- | 43,37 | --- | --- | --- |
| Harz V1N | --- | --- | 49,05 | --- | --- |
| Harz V1A | --- | --- | --- | 46,22 | --- |
| Harz V1B | --- | --- | --- | --- | 43,37 |
| Uralac P2127 | 48,78 | 51,63 | 45,95 | 48,78 | 51,63 |
| Araldit GT 3032 | 5,00 | 5,00 | 5,00 | 5,00 | 5,00 |
| Benzoin | 0,3 | 0,3 | 0,3 | 0,3 | 0,3 |
| $TiO_2$-Pigment | 50 | 50 | 50 | 50 | 50 |

Uralac® P 2127 ist ein kommerziell erhältlicher Polyester der Firma DSM (NL) auf Basis von Trimellitsäure und Neopentylglycol/Dimethylolcyclohexan mit einem Molekulargewicht (Mw; GPC, Polystyroleichung) von etwa 6750 und einer Säurezahl von etwa 82 mg KOH/g, Araldit ® GT 3032 ein Modifizierungsmittel für die Oberflächenspannung von Puvlerlacken enthaltend 90 Gew.-% eines difunktionellen Epoxidharzes. Harz und Polyester sind in allen Pulverlackzusammensetzungen in etwa stöchiometrischen Mengen enthalten.

Die Bestandteile werden zunächst vorgemischt und danach mit Hilfe eines Zweischneckenextruders (PRISM TSE 16 PC) bei 110°C weiter vermischt. Das Extrudat wird auf einer Kühlrolle gekühlt, zu Klumpen zerbrochen und danach mit einer Zentrifugalmühle der Firma "Retch" zu einem feinen Pulver vermahlen, das schliesslich durch ein Sieb von 100µm Maschenweite gesiebt wird. Mit Hilfe einer elektrostatischen Sprühpistole von ESB wird das Pulver auf 60µm dicke Q-Paneele in einer Dicke von 0,8 mm aufgetragen. Die Paneele werden in einem Ofen 15 min lang auf 200°C erhitzt, um die Beschichtung zu schmelzen und auszuhärten.

Die Oberflächenstruktur wird mit Hilfe eines "Wave Scan" - Profilometer (Fa. Byk-Gardener) auf ihre Oberflächentextur hin untersucht. Die hierbei gefundenen k-Parameter (longwave) sind in der folgenden Tabelle angegeben.

| | PL-E1A | PL-E1B | PL-V1N | PL-V1A | PL-V1B |
|---|---|---|---|---|---|
| Harz | E1A | E1B | V1N | V1A | V1B |
| $f_{(AvaH/Mix)}$ des Harzes | 1,78 | 1,97 | 2,00 | 2,20 | 2,39 |

(fortgesetzt)

| | PL-E1A | PL-E1B | PL-V1N | PL-V1A | PL-V1B |
|---|---|---|---|---|---|
| k (longwave) | 33,5 | 43,7 | 59,1 | 54,5 | 55,3 |
| Schlagverformung; r [kg/cm] | --- | >160 | >160 | --- | --- |
| Erichsentiefziehtest [mm] | --- | 9,1 | 9,4 | --- | --- |

Die Schlagverformung; r(rückseitig) wird bestimmt, indem man einen Stempel mit einem Gewicht von 2 kg, an dessen Unterseite sich eine Kugel von 20 mm Durchmesser befindet, mit der Unterseite voraus aus bestimmter Höhe von hinten auf die beschichtete Fläche fallen lässt. Der angegebenen wert ist das Produkt aus dem Gewicht des Stempels in kg und der Versuchshöhe in cm, bei der noch keine Beschädigung der Beschichtung feststellbar ist. Der Erichsentiefziehtest erfolgt nach DIN 53156. k-Werte (longwave) über etwa 50 zeigen hierbei eine sehr ungleichmässige Oberfläche (Orangenschaleneffekt) und somit einen mangelhaften Verlauf an, Werte im Bereich von 30 bedeuten dagegen eine sehr ebenen Oberfläche und einen sehr guten Verlauf. Man erkennt, dass der Verlauf der erfindungsgemässen Pulverlacke PL-E1A und PL-E1B und die mit diesen Lacken erreichte Oberflächenstruktur wesentlich besser ist als die der Vergleichsmischungen PL-V1N, PL-V1A und PL-V1B. Dies gilt insbesondere auch für den Pulverlack PL-E1B im Vergleich zum Lack PL-V1N, obwohl beide Lacke auf Epoxidharzen praktisch gleicher mittlerer Epoxidfunktionalität basieren. Der erfindungsgemässe Pulverlack PL--E1B zeigt auch praktisch gleiche mechanische Eigenschaften wie der Vergleichslack PL-V1N.

Beispiel 2:

In der in Beispiel 1 beschriebenen Weise werden 714,1 g (3,806 Epoxidequivalente) Bisphenol A-diglycidylether, 235,9 g (2,069 Hydroxylequivalente) Bisphenol A und 50 g (0,333 Hydroxyleqivalente) p-tert-Butylphenol in Gegenwart von 0,715 g einer 20 %igen Lösung von N,N-Ethylmethylpiperidiniumiodid in Ethanol als Avancierungskatalysator umgesetzt. Das Harz (Harz E2) hat ein Epoxidequivalentgewicht ($EEW_p$) von 714 ($EEW_{theoretisch}$ 712), einen Mettler-Erweichungspunkt von 86,4°C (gemessen in einem Mettler-Thermosystem FP 800), eine Höppler-Viskosität von 275 mPa·s (25°C/40% in Butylcarbinol nach DIN 53015) und eine Schmelzviskosität (ICI Ebrecht) von etwa 11,4 Poise bei 150°C. Die mittlere Epoxidfunktionalität $f_{(AvaH)}$ des Harzes beträgt 1,62, das theoretische mittlere Molekulargewicht somit 1153. Bei einer Temperatur von etwa 130°C werden zu je einem Teil des Harzes 2,35 Gew.-% (Harz E2A), 4,2 Gew.-% (Harz E2B) und 10 Gew.-% (E2C) Epoxycresolnovolak (Araldite ECN 1299, Molekulargewicht ca. 1270; Epoxidequivalentgewicht 235, mittlere Epoxidfunktionalität 5,4) zugefügt.

Die Epoxidharzgemische E2A, E2B sowie E2C weisen folgende Eigenschaften auf:

| Harz | Gew.-% ECN 1299 | $f_{(Mix)}$ | Mettler-Softening Point [°C] | Schmelzviskosität (ICI Ebrecht) [Poise] |
|---|---|---|---|---|
| E2A | 2,35 | 1,70 | 86,5 | 11,6 |
| E2B | 4,2 | 1,76 | 85,8 | 12,0 |
| E2C | 10 | 1,96 | 87,2 | 12,4 |

Unter Verwendung jeweils eines der drei Harzgemische werden die sechs Pulverlackzusammensetzungen PLA-E2A, PLA-E2B, PLA-3C sowie PLB-E2A, PLB-E28, PLA-E3C hergestellt, mit der in der nachfolgenden Tabelle angegebenen Zusammensetzung (Mengenangabe in Gramm):

| Bestandteil | PLA-E2A | PLA-E2B | PLA-E2C | PLB-E2A | PLB-E2B | PLB-E2C |
|---|---|---|---|---|---|---|
| Harz E2A | 35,29 | --- | --- | 27,82 | --- | --- |
| Harz E2B | --- | 34,58 | --- | --- | 27,29 | --- |
| Harz E2C | --- | --- | 32,13 | --- | --- | 25,05 |
| Uralac P2610 | 59,71 | 60,42 | 62,87 | | | |
| Uralac P5170 | | | | 67,18 | 67,81 | 69,95 |
| Araldit GT 3032) | 5,00 | 5,00 | 5,00 | 5,00 | 5,00 | 5,00 |

(fortgesetzt)

| Bestandteil | PLA-E2A | PLA-E2B | PLA-E2C | PLB-E2A | PLB-E2B | PLB-E2C |
|---|---|---|---|---|---|---|
| Benzoin | 0,3 | 0,3 | 0,3 | 0,3 | 0,3 | 0,3 |
| $TiO_2$-Pigment | 50 | 50 | 50 | 50 | 50 | 50 |

Uralac® P2610 ist ein kommerziell erhältlicher Polyester der Firma DSM auf Basis von Phthalsäure/Isophthalsäure/Adipinsäure/Trimellitsäure und Neopentylglycol/Propandiol mit einem Molekulargewicht (Mw; GPC mit Polystyroleichung) von etwa 9280 und einer Säurezahl von 55 mg KOH/g, Uralac® P5170 ein Polyester der Firma DSM auf Basis von Phthalsäure/Isophthalsäure/Adipinsäure und Neopentylglycol/Trimethylolpropan mit einem Molekuargewicht (Mw; GPC mit Polystyroleichung) von etwa 11000 und einer Säurezahl von 38 mg KOH/g. Harz und Polyester sind in allen Pulverlackzusammensetzungen in etwa stöchiometrischen Mengen enthalten.

Die Pulverlackzusammensetzungen werden wie bei Beispiel 1 angegeben verarbeitet und ihre Oberflächenstruktur wird mit Hilfe eines "Wave Scan" - Profilometer (Fa. Byk-Gardener) auf ihre Oberflächentextur hin untersucht. Die hierbei gefundenen k-Parameter (longwave) sind in der folgenden Tabelle angegeben.

| | PLA-E2A | PLA-E2B | PLA-E2C | PLB-E2A | PLB-E2B | PLB-E2C |
|---|---|---|---|---|---|---|
| $f_{(AvaH/Mix)}$ des Harzes | 1,70 | 1,76 | 1,96 | 1,70 | 1,76 | 1,96 |
| k (longwave) | 35,9 | 34,7 | 44,2 | 20,7 | 20,8 | 29,0 |
| Schlagverformung; r [cm kg] | <160 | >160 | >160 | >160 | >160 | >160 |
| Erichsentiefziehtest [mm] | 10,3 | 9,9 | 10,0 | 10,2 | 10,7 | 10,1 |

Beispiel 3:

In der in Beispiel 1 beschriebenen Weise werden 713,22 g (3,787 Epoxidequivalente) Bisphenol A-diglycidylether, 235,71 g (2,067 Hydroxylequivalente) Bisphenol A und 51,07 g (0,340 Hydroxyleqivalente) p-tert-Butylphenol und 2,85 g einer 1 %igen Lösung von 2-Phenylimidazol in n-Butanol als Avancierungskatalysator bei 100°C vermischt und 1 Stunde und 35 Minuten auf 180°C erhitzt, bevor eine Probe des Harzes entnommen wird. Das Harz (Harz E3) hat ein Epoxidequivalentgewicht ($EEW_p$) von 769 ($EEW_{theoretisch}$ 725), einen Mettler-Erweichungspunkt von 89,9°C (gemessen in einem Mettler-Thermosystem FP 800), eine Höppler-Viskosität von 325 mPa·s (25°C/40% in Butylcarbinol nach DIN 53015) und eine Schmelzviskosität (ICI Ebrecht) von etwa 16,5 Poise bei 150°C. Die mittlere Epoxidfunktionalität $f_{(AvaH)}$ des Harzes beträgt 1,61, das theoretische mittlere Molekulargewicht 1167. Mit Hilfe einer gaschromatographischen Spurenanalyse werden 0,04 Gew.-% freies Monophenol im Harz E3 festgestellt.

Zum Vergleich wird ein dem Harz E3 entsprechendes Harz analog zur Vorschrift in der EP-A-0 299 421 hergestellt, indem man zunächst 714,8 g (3,791 Epoxidequivalente) Bisphenol A-diglycidylether und 235,7 g (2,071 Hydroxylequivalente) Bisphenol A in Gegenwart von 2,85 g einer 1 %igen Lösung von 2-Phenylimidazol in n-Butanol als Avancierungskatalysator bei 100°C vermischt, das Gemisch innerhalb einer Stunde auf 180°C erhitzt und 45 Minuten auf dieser Temperatur hält. Der avancierte Bisphenol A-diglycidylether hat ein Epoxidequivalentgewicht ($EEW_p$) von 546 ($EEW_{theoretisch}$ 549), einen Mettler-Erweichungspunkt von 84,8°C (gemessen in einem Mettler-Thermosystem FP 800) und eine Schmelzviskosität (ICI Ebrecht) von etwa 11,4 Poise bei 150°C. Zu diesem Harz werden 0,333 Mol p-tert-Butylphenol gegeben. Das erhaltene Gemisch wird 20min auf 178°C erhitzt und danach ohne weitere Temperaturzuführung weitere 17min gerührt. Das hierbei erhaltene Harz V3 hat ein Epoxidequivalentgewicht ($EEW_p$) von 725 ($EEW_{theoretisch}$ 725), einen Mettler-Erweichungspunkt von 88,1 °C (gemessen in einem Mettler-Thermosystem FP 800) und eine Schmelzviskosität (ICI Ebrecht) von etwa 13,8 Poise bei 150°C. Die mittlere Epoxidfunktionalität $f_{(AvaH)}$ des Harzes beträgt 1,61, das theoretische mittlere Molekulargewicht somit 1167. Mit Hilfe einer gaschromatographischen Spurenanalyse werden 0,6 Gew.-% freies p-tert-Butylphenol im Harz V3 festgestellt, ein nicht zu akzeptierender hoher Wert im Vergleich zu dem Wert von 0,04 Gew.-% für das Harz E3.

Bei einer Temperatur von etwa 130°C wird zu einem Teil des oben genannten Harzes E3 Epoxycresolnovolak (Araldit® ECN 1299, Molekulargewicht ca. 1270; Epoxidequivalentgewicht 235, mittlere Epoxidfunktionalität 5,4) in einer Menge von 2,35 Gew.-% zugefügt, wobei das Harz E3A erhalten wird. Mit diesem Harz wird, wie in Beispiel 1 beschrieben, der Pulverlack PL-E3A mit folgender Zusammensetzung hergestellt:

| Bestandteil | Menge [g] |
|---|---|
| Uralac P2127 | 48,23 |
| Harz E3A | 46,77 |
| Araldit GT 3032 | 5,00 |
| Titandioxid-Pigment | 50 |
| Benzoin | 0,30 |

Die Eigenschaften der oben genannten Harze E3, V3 und V3A sowie der k-Parameter (longwave) des Pulverlacks PL-E3A sind in der folgenden Tabelle zusammengestellt.

| Harz | Herstellungsweise | $f_{(AvaH)}$ | Mettler-Erweichungspunkt [°C]. | Viskosität [Poise] | k-Wert longwave | Gew.-% freies Butylphenol |
|---|---|---|---|---|---|---|
| E3 | Erfindung | 1,61 | 89,9 | 16,6 | --- | 0,04 |
| V3 | EP-A-299 421 | 1,61 | 88,1 | 13,8 | --- | 0,6 |
| E3A | | 1,7 | 89,9 | 16,4 | 29 | --- |

Beispiel 4:

Durch Vermischen von 96,13 g des Pulvers eines Epoxidharzes wie das Harz E2 aus Beispiel 2 (mittlere Epoxidfunktionalität etwa 1,6; Mettler-Erweichnungspunkt 86,4°C) und 3,87 g eines Pulvers von Araldit PT 910 (feste Mischphase aus Trimellitsäuretriglycidylester und Terephthalsäurediglycidylester mit einem Epoxidäquivalentgewicht von 147 und einer mittleren Epoxidfunktionalität von etwa 2,2) wird ein Harz E4 hergestellt, das eine mittlere Epoxidfunktionalität von 1,69 aufweist. Mit diesem Harz wird, wie in Beispiel 1 beschrieben, der Pulverlack PL-E4 (60:40 Hybrid) mit folgender Zusammensetzung hergestellt:

| Bestandteil | Menge [g] |
|---|---|
| Crylcoat 350 | 59,44 |
| Harz E4 | 35,56 |
| Araldit GT 3032 | 5,00 |
| Titandioxid-Pigment | 50 |
| Benzoin | 0,30 |

Crylcoat® 350 ist ein kommerziell verfügbarer Polyester der Firma UCB auf Basis von Terephthalsäure/Isophthalsäure/Trimellitsäure und Neopentylglycol; Molekulargewicht Mw; GPC mit Polystyroleichung 9100, Säurezahl 50mg KOH/g.

Der Pulverlack hat eine Gelzeit von 2min 5s bei 180°C und wird mit einer elektrostatischen Sprühpistole von ESB auf 0,8 mm dicke Q-Paneele aufgebracht und zur Härtung 15 Minuten lang auf 200°C erhitzt. Man findet die folgenden Eigenschaften:

| | |
|---|---|
| Schlagverformung; r [cm kg] | >160 |
| Erichsentiefziehtest [mm] | 10,0 |
| Glanz bei 60°/20° | 99/94 |

**Patentansprüche**

**1.** Pulverlackzusammensetzung, enthaltend

(A) ein festes Epoxidharzgemisch, das mindestens eine Epoxidharzkomponente (A1) und eine Epoxidharzkomponente (A2) umfasst, sowie

(B) einen Polyester mit freien Carboxylgruppen, in einer zur Aushärtung der Zusammensetzung ausreichenden Menge, wobei

die Epoxidharzkomponente (A1 ) aus einem oder mehreren Epoxidharzen besteht und insgesamt eine mittlere Epoxidfunktionalität aufweist, die grösser als 2 ist,
**dadurch gekennzeichnet,**
**dass** die Epoxidharzkomponente (A2) aus einem oder mehreren avancierten Epoxidharzen besteht, die jeweils eine mittlere Epoxidfunktionalität aufweisen, die mindestens 1,2 aber kleiner als 1,95 ist, und die das Produkt einer Umsetzung darstellen, bei der (i) mindestens eine Diglycidylverbindung gleichzeitig (ii) mit mindestens einer Bisphenolverbindung und (iii) mindestens einem Monophenol als Edukte umgesetzt werden, und die Differenz aus der mittleren Epoxidfunktionalität des Epoxidharzgemisches (A) und der mittleren Epoxidfunktionalität der Komponente (A2) des Gemisches mindestens 0,05 aber kleiner als 0,8 ist.

**2.** Pulverlackzusammensetzung nach Anspruch 1, **dadurch gekennzeichnet, dass** die avancierten Epoxidharze in der Epoxidharzkomponente (A2) das Reaktionsprodukt der Umsetzung einer oder mehrerer Diglycidylverbindungen der Formel (I) darstellen:

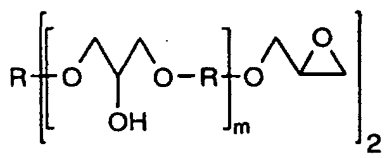

(I),

worin
R der Formel

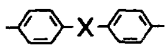

und
X in jeder Gruppe R unabhängig voneinander $>CH_2$ oder $>C(CH_3)_2$ und
m eine Zahl von 0 bis 1 darstellen.

**3.** Pulverlackzusammensetzung nach einem der Ansprüche 1 oder 2, **dadurch gekennzeichnet, dass** die Monophenolkomponente (iii) ausgewählt ist aus der Gruppe bestehend aus $C_1$-$C_{12}$-Alkylphenolen und $C_6$-$C_{10}$-Arylphenolen.

**4.** Pulverlackzusammensetzung nach Anspruch 3, **dadurch gekennzeichnet, dass** es sich um p-$C_3$-$C_8$-Alkylphenole oder um p-Phenylphenol handelt.

**5.** Pulverlackzusammensetzung nach einem der Ansprüche 1 bis 4, **dadurch gekennzeichnet, dass** die Komponente (A1) des Epoxidharzgemisches (A) eines oder mehrere Mitglieder der Gruppe umfasst, bestehend aus:

(A1,1 ) Triglycidylisocyanurat;
(A1,2) Trimellitsäuretriglycidylester;
(A1,3) Hexahydrotrimellitsäuretriglycidylester;
(A1,4) feste Mischphasen aus

einer ersten Komponente ausgewählt aus

(A1,4,1) Trimellitsäuretriglycidylester,
(A1,4,2) Hexahydrotrimellitsäuretriglycidylester und
(A1,4,3) Gemischen der Bestandteile (A1,4,1) und (A1,4,2) und

einer zweiten Komponente ausgewählt aus

(A1,4,4) Terephthalsäurediglycidylester;
(A1,4,5) Hexahydroterephthalsäurediglycidylester und
(A1,4,6) Gemischen der Bestandteile (A1,4,4) und (A1,4,5);

(A1,5) Epoxyphenolnovolaken;
(A1,6) Epoxycresolnovolaken und
(A1,7) Gemischen von zwei oder mehr der Gruppenmitglieder (A1,1), (A1,2), (A1,3), (A1,4), (A1,5) und (A1,6).

**6.** Pulverlackzusammensetzung nach Anspruch 5, **dadurch gekennzeichnet, dass** die Komponente (A1) des Epoxidharzgemisches (A) eines oder mehrere Mitglieder der Gruppe umfasst, bestehend aus:

(A1,5) Epoxyphenolnovolaken;
(A1,6) Epoxycresolnovolaken.

**7.** Pulverlackzusammensetzung nach einem der Ansprüche 1 bis 6, **dadurch gekennzeichnet, dass** das Epoxidharzgemisch (A) ein Produkt darstellt, das nach einem Verfahren erhältlich ist, bei dem man:

a) die Edukte (i), (ii) und (iii) des Advancementharzes in Gegenwart eines thermisch nicht desaktivierbaren Advancementkatalysators bei Temperaturen von mindestens 130°C umsetzt,
b) nach Beendigung der Umsetzung bei einer Temperatur von etwa 130°C zu dem hierbei erhaltenen Produkt die Epoxidharzkomponente (A1 ) zugibt und
c) das erhaltene Epoxidharzgemisch bei dieser Temperatur homogenisiert.

**8.** Pulverlackzusammensetzung nach einem der Ansprüche 1 bis 6, **dadurch gekennzeichnet, dass** das Epoxidharzgemisch (A) ein Produkt darstellt, das nach einem Verfahren erhältlich ist, bei dem man:

a) die Edukte (i), (ii) und (iii) des Advancementharzes in Gegenwart eines thermisch desaktivierbaren Advancementkatalysators bei Temperaturen von 160 bis 170°C umsetzt,
b) nach Beendigung der Umsetzung den Katalysator durch Erhitzen auf eine Temperatur von etwa 180°C desaktiviert und bei dieser Temperatur zu dem hierbei erhaltenen Produkt die Epoxidharzkomponente (A1) zugibt und
c) das erhaltene Epoxidharzgemisch bei dieser Temperatur homogenisiert.

**9.** Pulverlackzusammensetzung nach einem der Ansprüche 1 bis 8, **dadurch gekennzeichnet, dass** das Epoxidharzgemisch (A) eine mittlere Epoxidfunktionalität aufweist, die kleiner als 2 ist.

**10.** Pulverlackzusammensetzung nach Anspruch 9, **dadurch gekennzeichnet, dass** die mittlere Epoxidfunktionalität 1,65 bis 1,80 beträgt.

**11.** Pulverlackzusammensetzung nach einem der Ansprüche 1 bis 10, **dadurch gekennzeichnet, dass** sie freie Carboxylgruppen enthaltende Polyester und Epoxidharze insgesamt in einem der Gewichtsverhältnisse 70±5 zu 30±5, 60±5 zu 40±5 oder 50±5 zu 50±5 enthält.

**12.** Pulverlackzusammensetzung nach einem der Ansprüche 1 bis 11, **dadurch gekennzeichnet, dass** sie Polyester enthält, die nicht auf Trimellithsäureanhydrid basieren.

**13.** Verfahren zur Herstellung eines Epoxidharzgemisches, bei dem man gleichzeitig:

a)

(i) mindestens eine Diglycidylverbindung mit
(ii) mindestens einer Bisphenolverbindung und
(iii) mindestens einem Monophenol

in Gegenwart eines thermisch desaktivierbaren Advancementkatalysators, bei Temperaturen von 160 bis 170°C umsetzt,
b) nach Beendigung der Umsetzung den Katalysator durch Erhitzen auf eine Temperatur von etwa 180°C desaktiviert und bei dieser Temperatur zu dem hierbei erhaltenen Produkt eine Epoxidharzkomponente (A1)

gemäss Anspruch 1 zugibt und
c) das erhaltene Epoxidharzgemisch bei dieser Temperatur homogenisiert.

## Claims

**1.** A powder coating composition comprising

(A) a solid epoxy resin mixture that comprises at least one epoxy resin component (A1) and one epoxy resin component (A2) and
(B) a free-carboxyl-group-containing polyester in an amount sufficient for the full cure of the composition,

in which the epoxy resin component (A1) consists of one or more epoxy resins and has overall a mean epoxy functionality that is greater than 2,
wherein the epoxy resin component (A2) consists of one or more advanced epoxy resins, each of which has a mean epoxy functionality of at least 1.2 but less than 1.95, and is the product of a reaction in which (i) at least one diglycidyl compound is simultaneously reacted with (ii) at least one bisphenol compound and (iii) at least one monophenol as starting materials, and the difference between the mean epoxy functionality of the epoxy resin mixture (A) and the mean epoxy functionality of component (A2) of the mixture is at least 0.05 but less than 0.8.

**2.** A powder coating composition according to claim 1, wherein the advanced epoxy resins in the epoxy resin component (A2) are products of the reaction of one or more diglycidyl compounds of formula (I) :

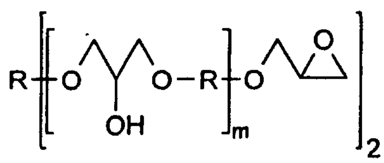 (I),

wherein
R corresponds to the formula

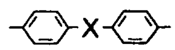

and
X in each of the groups R corresponds independently of the others to $>CH_2$ or $>C(CH_3)_2$ , and
m is a number from 0 to 1.

**3.** A powder coating composition according to claim 1, wherein the monophenol component (iii) is selected from the group consisting of $C_1$-$C_{12}$alkylphenols and $C_6$-$C_{10}$arylphenols.

**4.** A powder coating composition according to claim 3, wherein component (iii) is a p-$C_3$-$C_B$alkylphenol or p-phenylphenol.

**5.** A powder coating composition according to claim 1, wherein the component (A1) of the epoxy resin mixture (A) comprises one or more members from the group consisting of:

(A1.1) triglycidyl isocyanurate;
(A1.2) trimellitic acid triglycidyl ester;
(A1.3) hexahydrotrimellitic acid triglycidyl ester;
(A1.4) solid mixed phases comprising

a first component selected from

(A1.4.1) trimellitic acid triglycidyl ester,

(A1.4.2) hexahydrotrimellitic acid triglycidyl ester and
(A1.4.3) mixtures of constituents (A1.4.1) and (A1.4.2) and

a second component selected from

(A1.4.4) terephthalic acid diglycidyl ester,
(A1.4.5) hexahydroterephthalic acid diglycidyl ester and
(A1.4.6) mixtures of constituents (A1.4.4) and (A1.4.5);

(A1.5) epoxyphenol novolaks;
(A1.6) epoxycresol novolaks and
(A1.7) mixtures of two or more of the group members (A1.1), (A1.2), (A1.3), (A1.4) , (A1.5) and (A1.6).

**6.** A powder coating composition according to claim 5, wherein component (A1) of the epoxy resin mixture (A) comprises one or more members from the group consisting of:

(A1.5) epoxyphenol novolaks;
(A1.6) epoxycresol novolaks.

**7.** A powder coating composition according to claim 1, wherein the epoxy resin mixture (A) is a product obtainable according to a process in which:

a) the starting materials (i), (ii) and (iii) of the advancement resin are reacted at temperatures of at least 130°C in the presence of an advancement catalyst that cannot be thermally deactivated,
b) when the reaction is complete, the epoxy resin component (A1) is added at a temperature of approximately 130°C to the resulting product, and
c) the resulting epoxy resin mixture is homogenised at that temperature.

**8.** A powder coating composition according to claim 1, wherein the epoxy resin mixture (A) is a product obtainable according to a process in which:

a) the starting materials (i), (ii) and (iii) of the advancement resin are reacted at temperatures of from 160 to 170°C in the presence of an advancement catalyst that can be thermally deactivated,
b) when the reaction is complete, the catalyst is deactivated by heating to a temperature of approximately 180°C and, at that temperature, the epoxy resin component (A1) is added to the resulting product, and
c) the resulting epoxy resin mixture is homogenised at that temperature.

**9.** A powder coating composition according to claim 1, wherein the epoxy resin mixture (A) has a mean epoxy functionality of less than 2.

**10.** A powder coating composition according to claim 9, wherein the mean epoxy functionality is from 1.65 to 1.80.

**11.** A powder coating composition according to claim 1, which comprises free-carboxyl-group-containing polyesters and epoxy resins in total in a ratio by weight of 70 ± 5 : 30 ± 5 , 60 ± 5 : 40 ± 5 or 50 ± 5 : 50 ± 5.

**12.** A powder coating composition according to claim 1, which comprises polyesters that are not based on trimellitic acid anhydride.

**13.** A process for the preparation of an epoxy resin mixture in which simultaneously:

a)

(i) at least one diglycidyl compound is reacted at temperatures of from 160 to 170°C with
(ii) at least one bisphenol compound and
(iii) at least one monophenol

in the presence of an advancement catalyst that can be thermally deactivated,
b) when the reaction is complete, the catalyst is deactivated by heating to a temperature of approximately

180°C and, at that temperature, an epoxy resin component (A1) according to claim 1 is added to the resulting product, and
c) the resulting epoxy resin mixture is homogenised at that temperature.

**Revendications**

1. Composition de vernis en poudre renfermant

   (A) un mélange solide de résines époxydes, qui comprend au moins un composant résine époxyde (A1) et un composant résine époxyde (A2), ainsi que
   (B) un polyester présentant des groupes carboxyle libres, dans une quantité suffisante pour le durcissement,

   le composant résine époxyde (A1) étant constitué par une ou plusieurs résines époxydes et présente au total une fonctionnalité époxyde moyenne qui est supérieure à 2,
   **caractérisée en ce que**
   le composant résine époxyde (A2) est constitué par une ou plusieurs résines époxydes pré-allongées, chacune présentant une fonctionnalité époxyde moyenne d'au moins 1,2, mais inférieure à 1,95, et représentant le produit d'une réaction dans laquelle (i) au moins un composé diglycidylique réagit simultanément avec (ii) au moins un composé du bisphénol et (iii) au moins un monophénol, en tant que produits de départ, et la différence entre la fonctionnalité époxyde moyenne du mélange de résines époxydes (A) et la fonctionnalité époxyde moyenne du composant (A2) du mélange s'élève à au moins 0,05, mais elle est inférieure à 0,8.

2. Composition de vernis en poudre selon la revendication 1, **caractérisée en ce que** les résines époxydes pré-allongées dans le composant résine époxyde (A2) représentent le produit réactionnel de la réaction d'un ou plusieurs composés diglycidyliques de formule (I) :

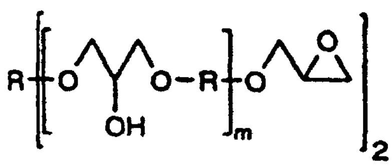

(I),

   où
   R représente la formule

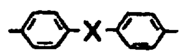

   et
   X dans chaque groupe R indépendamment les uns des autres représentent >$CH_2$ ou >$C(CH_3)_2$ et
   m va de 0 à 1.

3. Composition de vernis en poudre selon l'une des revendications 1 ou 2, **caractérisée en ce que** le composant monophénol (iii) est pris dans le groupe comprenant des (alkyl en $C_1$-$C_{12}$)phénols et (aryl en $C_6$-$C_{10}$)phénols.

4. Composition de vernis en poudre selon la revendication 3, **caractérisée en ce qu'**il s'agit de p-(alkyl en $C_3$-$C_8$) phénols ou de p-phénylphénol.

5. Composition de vernis en poudre selon l'une des revendications 1 à 4, **caractérisée en ce que** le composant (A1) du mélange de résines époxydes (A) comprend un ou plusieurs membres du groupe comprenant :

   (A1,1) l'isocyanurate de triglycidyle ;
   (A1,2) le trimellitate de triglycidyle ;
   (A1,3) l'hexahydrotrimellitate de triglycidyle

(A1,4) des phases mixtes solides comprenant

un premier composant pris parmi

(A1,4,1) le trimellitate de triglycidyle ;
(A1,4,2) l'hexahydrotrimellitate de triglycidyle et
(A1,4,3) des mélanges des constituants (A1,4,1) et (A1,4,2) et

un second composant pris parmi

(A1,4,4) le téréphtalate de diglycidyle ;
(A1,4,5) l'hexahydrotéréphthalate de diglycidyle et
(A1,4,6) des mélanges des constituants (A1,4,4) et (A1,4,5) ;

(A1,5) des époxyphénolnovolaques ;
(A1,6) des époxycrésolnovolaques et
(A1,7) des mélanges de deux ou plusieurs membres du groupe (A1,1), (A1,2), (A1,3), (A1,4), (A1,5) et (A1,6).

**6.** Composition de vernis en poudre selon la revendication 5, **caractérisée en ce que** le composant (A1) du mélange de résines époxydes (A) comprend un ou plusieurs membres du groupe comprenant

(A1,5) des époxyphénolnovolaques ;
(A1,6) des époxycrésolnovolaques.

**7.** Composition de vernis en poudre selon l'une des revendications 1 à 6, **caractérisée en ce que** le mélange de résines époxydes (A) représente un produit que l'on peut obtenir selon un procédé dans lequel

a) on fait réagir les produits de départ (i), (ii) et (iii) de la résine pré-allongée, en présence d'un catalyseur de pré-allongement non désactivable par la chaleur, à une température d'au moins 130°C,
b) après avoir terminé la réaction à une température d'environ 130°C, on ajoute au produit ainsi obtenu le composant résine époxyde (A1) et
c) on homogénéise le mélange obtenu à cette température.

**8.** Composition de vernis en poudre selon l'une des revendications 1 à 6, **caractérisée en ce que** le mélange de résines époxydes (A) représente un produit que l'on peut obtenir selon un procédé dans lequel

a) on fait réagir les produits de départ (i), (ii) et (iii) de la résine pré-allongée en présence d'un catalyseur de pré-allongement désactivable par la chaleur, à une température de 160 à 170°C,
b) après avoir terminé la réaction, le catalyseur est désactivé par chauffage à une température d'environ 180°C et on ajoute à cette température au produit ainsi obtenu le composant résine époxyde (A1) et
c) on homogénéise le mélange de résines époxydes à cette température.

**9.** Composition de vernis en poudre selon l'une des revendications 1 à 8, **caractérisée en ce que** le mélange de résines époxydes (A) présente une fonctionnalité époxyde moyenne, qui est inférieure à 2.

**10.** Composition de vernis en poudre selon la revendication 9, **caractérisée en ce que** la fonctionnalité époxyde moyenne est de 1,65 à 1,80.

**11.** Composition de vernis en poudre selon l'une des revendications 1 à 10, **caractérisée en ce qu'**elle renferme des polyesters présentant des groupes carboxyles libres et des résines époxydes, au total dans un rapport en masse de 70 ± 5 à 30 ± 5, de 60 ± 5 à 40 ± 5 ou 50 ± 5 à 50 ± 5.

**12.** Composition de vernis en poudre selon l'une des revendications 1 à 11, **caractérisée en ce qu'**elle renferme des polyesters qui ne dérivent pas de l'anhydride trimellitique.

**13.** Procédé pour la préparation d'un mélange de résines époxydes dans lequel on ajoute en même temps

(a)

(i) au moins un composé diglycidylique avec
(ii) au moins un composé du bisphénol et
(iii) au moins un monophénol

en présence d'un catalyseur de pré-allongement désactivable par la chaleur, à une température de 160 à 170°C,
b) après avoir terminé la réaction, le catalyseur est désactivé par chauffage à une température d'environ 180°C et on ajoute à cette température au produit ainsi obtenu le composant résine époxyde (A1)selon la revendication 1 et
c) on homogénéise le mélange obtenu de résines époxydes à cette température.